Europäisches Patentamt

(19) European Patent Office

Office européen des brevets

(11) Publication number : **0 214 111 B1**

(12) **EUROPEAN PATENT SPECIFICATION**

(45) Date of publication of patent specification :
31.07.91 Bulletin 91/31

(51) Int. Cl.⁵ : **C08G 69/34, C09D 5/04**

(21) Application number : 86870094.9

(22) Date of filing : 27.06.86

(54) **Improved thixotropic agents, thixotropic paint compositions containing them, and process for preparing the same.**

The file contains technical information
submitted after the application was filed and
not included in this specification

(30) Priority : 28.06.85 GB 8516356

(43) Date of publication of application :
11.03.87 Bulletin 87/11

(45) Publication of the grant of the patent :
31.07.91 Bulletin 91/31

(84) Designated Contracting States :
AT BE CH DE FR GB IT LI LU NL SE

(56) References cited :
EP-A- 0 113 002
FR-A- 2 320 189
US-A- 3 412 115
US-A- 3 622 604

(56) References cited :
CHEMICAL ABSTRACTS, vol. 79, no. 1, 9th
July 1973, page 101, abstract no. 6896z, Col-
umbus, Ohio, US; & CS-A-146 293 (K. HAJEK et
al.) 15-11-1972

(73) Proprietor : FINA RESEARCH S.A.
Zone Industrielle C
B-6520 Seneffe (Feluy) (BE)

(72) Inventor : van Berk, Peter
Wilhelminastraat 104
NL-2651 ES Berkel-Rodenrijs (NL)
Inventor : Verborgt, Jozef
Thamerhorn 82
NL-1421 Uithoorn (NL)
Inventor : Braeken, Jozef
Lindestraat 88
B-9470 Denderleeuw (BE)

(74) Representative : Leyder, Francis
c/o Fina Research S.A. Zone Industrielle C
B-6520 Feluy (Feluy) (BE)

EP 0 214 111 B1

## Description

The present invention relates to improved thixotropic agents and in particular to certain novel polyamides, which when included in paint compositions give them improved thixotropic properties. The present invention is also concerned with the methods of preparation of these thixotropic agents.

The present invention also relates to improved thixotropic paint compositions containing the thixotropic agents of the invention, and to the methods for preparing them.

Polyamides are known in the art as binders for inks (see US-3 412 115-A, EP-113 002-A, FR-2 320 189-A and US-3 622 604-A).

Thixotropic alkyds are known from CS-146 293-A as abstracted in Chemical Abstracts (79, 6896, 1973), and prepared by chemical reaction of alkyd resin with acid-dimer-ethylenediamine resin and another polymer.

It is known in the paint-making art that thixotropy arises with the formation of hydrogen bonds, more particularly between C=O and either N - H or O - H groups in different molecules.

It is often desirable to use paints having thixotropic properties because such paints are more easy to use, since they have less tendency to sag, when applied to vertical substrates.

It is known to prepare thixotropic paints by incorporating therein solid additives such as glycerol trihydroxystearate (GTHS, also known as hydrogenated castor oil) or polyethylene wax, or their mixtures with an amide wax prepared at least partially with hydroxystearic acid (HSA). While these additives give some thixotropic properties to the paint compositions, they have various disadvantages.

Indeed, GTHS has an acceptable behaviour in paint systems under normal temperature conditions, but it does not inhibit seeding when processing or storage of the paint occurs above about 50°C. In case of the use of GTHS-amide wax, temperature control during production is very critical.

To impart a desirable antisag effect, polyethylene was has to be used in an amount such that a marked decrease in the gloss of the dry paint film is observed.

There is therefore a need in the art for novel thixotropic agents which when included in paint compositions give them improved antisag properties which are retained during storage of the paint compositions and particularly after storage at elevated temperatures such as those encountered in tropical countries.

There is also a need for thixotropic agents which can be introduced into the paint compositions as a liquid by simple mixing so as to give the desired thixotropic to the compositions.

An object of the present invention is to provide novel and improved thixotropic agents.

Another object of the invention is to provide thixotropic agents which when included in paint compositions give them improved antisag properties, particularly after storage and more particularly after storage at elevated temperatures such as those encountered in tropical countries.

A further object is to provide a process for preparing said agents.

Another object is to provide paint compositions containing said agents and having improved thixotropic properties.

A further object is to provide thixotropic paint compositions which can be applied in relatively thick layers without sagging.

Still another object is to provide thixotropic paint compositions which can be processed or stored at relatively high temperatures, or even applied to high temperature substrates without sagging.

Another object of the invention is to provide an improved thixotropic paint composition which is prepared by merely introducing a suitable thixotropic agent in the form of a liquid .

Still a further object is to provide a method for improving the thixotropic properties of paint compositions.

A further object is to provide an improved process for incorporating the thixotropic agent into the paint composition.

Accordingly, the present invention provides thixotropic agents comprising polyamides which are obtained by the reaction of

(i) one or more diamines selected from xylylene diamine and alpha-omega diaminoalkanes containing 4 to 8 carbon atoms ; and

(ii) one or more carboxylic acids of general formula $H-C_nH_{2n}-COOH$, wherein $n = 1$ to 11, the molar ratio to the diamines ranging from 1 :1 to 2 :3 ; and

(iii) dimer acids, in such amount that the number of amine groups is about equal to the total number of carboxyl groups in compounds (ii) and (iii).

The thixotropic paint compositions of the present invention contain polyamides made by the reaction which is defined above.

The method of the invention for improving the thixotropic properties of a paint composition comprises adding to said composition up to 5 wt %, based on the weight of the composition, of thixotropic agents according to the present invention.

The Applicant has now unexpectedly found that, by using as thixotropic agent the polyamides which are obtained by the reaction of

(i) one or more diamines selected from the groups comprising xylylene diamine and alpha-omega diaminoalkanes containing 4 to 8 carbon atoms ; and

(ii) one or more carboxylic acids of general formula H-CnH2n-COOH wherein n = 1 to 11, the molar ratio to the diamines ranging from 1 :1 to 2 :3, preferably about 1 :1 ; and

(iii) dimer acids, in such amount that the number of amine groups is about equal to the total number of carboxyl groups in compounds (ii) and (iii),

the thixotropic properties of paint compositions containing said agent are greatly improved.

This fact is really unexpected since it is well known in the art that amide waxes do not give satisfactory results unless sumitted to optimal dispersion and swelling conditions, and that the gel strength is destroyed on heating.

The thixotropic agents of the invention are prepared by using diamines which are selected from xylylene diamine and alpha-omega diaminoalkanes containing 4 to 8 carbon atoms and preferably from the latter diamines. As suitable aliphatic diamines, 1,4-diaminobutane and 1,6-diaminohexane (hereinafter called hexamethylene diamine or HMDA) are preferred.

The polymerised fatty acids, hereinafter called dimer acids, used for the preparation of the thixotropic agents of the present invention are preferably mixtures of dimerised and trimerised unsaturated fatty acids. They are usually produced by catalytic self-condensation of unsaturated fatty acids, the latter being generally from glycerides of polymerisable fatty acids such as peanut, cottonseed, wheat soybean corn, linseed, tung, dehydrated castor, perilla, conjugated linseed or other oils of the drying or semi-drying type followed by optional hydrogenation of remaining double bond. Dimer acids are well known in the art and they are commercially available ; the preferred dimer acids are those obtained from fatty acids having about 18 or 20 carbon atoms and having therefore an acid value equal to about 190 mgKOH/g.

Suitable examples of such dimer acids are Pripol 1014 (Pripol is a trade mark of Unichema), Pripol 1018 and Pripol 1040, the characteristics of which are summarised in Table I.

TABLE I

| | dicarboxylic acid (wt%) | tricarboxylic acid (wt%) | acid value (mg KOH/g) | 1 eq-COOH (g) |
|---|---|---|---|---|
| Pripol 1014 | 95 | 4 (*) | 193-198 | about 286 |
| Pripol 1018 | 81 | 19 | 190-198 | about 289 |
| Pripol 1040 | 19 | 81 | 183-191 | about 299 |

(*) also contains 1wt% monomer

Dimer acids consisting predominantly of dicarbrxylic acids are preferred because they tend to give agents which impart better antisag properties after storage at elevated temperatures of the paint compositions whicn contain them.

The preparation of the thixotropic agents of the present invention also employs one or more carboxylic acids of general formula H-CnH2n-COOH wherein n ranges from 1 to 11 and preferably from 1 to 6. Suitable examples of such carboxylic acids are hexanoic acid, butyric acid, propionic acid, acetic acid, heptanoic acid, and other equivalent acids.

It is to be understood that functionally equivalent derivatives of the reactants, capable of reacting to form the polyamides of the invention may be used instead of reactants described herein.

For example, lower alkyl esters may be used in place of acids, whereby the by-product of the reaction is the corresponding alcohol (usually C1-C4 alcohol) instead of water.

Also, in the reaction between an acid and a diamine, the amine groups may be replaced by isocyanate groups, whereby the by-product of the reaction is carbon dioxde instead of water.

In accordance with an embodiment of the invention, in the preparation of the thixotroptic agent, the reaction may be carried out in any inert solvent having a not too high boiling temperature so as to allow its elimination by distillation without decomposing the polyamides. Examples of suitable solvents are toluene or xylene.

Preferably, the reaction is carried out by heating and stirring under reflux, preferably up to the boiling temperature for kinetic reasons, under an atmosphere of an inert gas like nitrogen, helium or the like.

The reactants may be added in any sequence. It is also possible to introduce all the reactants simultaneously, either before or during heating. When the reactants are added during heating, they are preferably added slowly.

A person in the art would know that certain reaction conditions are to be preferred in some cases. For

3

example, a slight excess of up to 5% of acid groups may be necessary in order to ensure complete reaction of primary amine groups.

The course of the reaction may be followed by infra-red spectrometry or by measuring the acid number.

After completion of the reaction, the polyamide is recovered by suitable means, but preferably by distillation of the inert solvent and of any remaining by-product either under a stream of nitrogen or of any other inert gas like helium, or under reduced pressure.

The process of the present invention for incorporating the hereabove disclosed thixotropic agents into paint compositions comprises the steps of

(i) dissolving the thixotropic agents of the present invention into a suitable solvent, either or both of which are heated as much as required ;

(ii) optionally, heating up the solution and/or the mixture of the other components of the paint composition;

(iii) adding the solution to the mixture of the other components of the paint composition.

Preferably, before the solution is added to the mixture in step (iii), the mixture is heated to a desired temperature.

Suitable solvents for the thixotropic agents of the present invention include isobutanol, benzyl alcohol, cyclohexanone, N- methylpyrrolidone, dimethylformamide, propylene glycol ether or mixtures of these solvents, but other solvents may be contemplated.

However, the solvent used must be compatible with the other components of the paint composition : for example, isobutanol or benzyl alcohol are to be avoided with isocyanate-containing paint compositions.

This process is really unexpected since it is well known in the art that the thixotropic properties given by polyamides are adversely affected by polar groups contained in solvents or in blending resins. (see e.g. SURFACE COATINGS, Paul ed., p 122, l 16, WILEY, 1985) The amount of thixotropic agents dissolved in a suitable solvent is generally at least 10% by weight, and preferably at least 25 wt %.

The solution may optionally be cooled down and stored after dissolving step (i). In some cases, e.g. when the concentration of the thixotropic agent in the solution in said solvent is elevated, or when reaction solvents like toluene or xylene have not been completely distilled off, the solution shows a tendency to form a gel on storage, but this gel disappears on heating and does not interfere with the process of the present invention providing the gel is heated up until it disappears.

The temperature at which the solvent must be heated in step (i) depends on the solvent and on the polyamides. However, it is preferable to pour the still warm polyamide into the solvent ; for example, a clear 50 wt % solution may usually be obtained when a polyamide of the present invention is poured at a temperature of about 110°C into room temperature isobutanol.

The composition to which the solution is added should preferably be warmed up to about 60°C.

After and sometimes during thorough mixing of the thioxtropic agent tin the paint composition, a thixotropic paint is obtained after a period of time which ranges from a few minutes to several hours, depending on several factors (among which are the nature of the resin, the mixing time and the temperature conditions) not all of which are understood.

The amount of thixotropic agent in the paint composition may be as high as 5 wt % (based on the weight of the composition and varies with factors such as the desired effects (antisag properties, pigment antisetting properties), the properties of the suspension dispersion, the conditions in preparing the suspension, and the nature and amount of the other components of the paint composition. The minimum amount is readily determined by those skilled in the art by a few simple experiments. The thixotropic agent content in the paint composition is usually from 0.1 to 3 % by weight, based on the weight of the composition. However, below a minimum amount which is usually from 0.2 to 0.6 wt %, only pigment anti-settling properties are observed.

While it is preferable to use the process of the present invention for incorporating the thixotropic agents disclosed herein, it is also possible to incorporate them as a powdered solid. However, it is known in the art that the desired properties require optimal dispersion and swelling conditions which are obtained with difficulty and under reatricted conditions when a powdered solid is used.

Persons skilled in the art know that, just before application, the paint compositions may have to be mixed with a suitable hardener.

The paint compositions of the present invention preferably comprise a resin system, one or several pigments and a thixotropic agent according to the present invention.

Suitable types of resin systems may be, but are not limited to, those based on epoxy resins, epoxyester resins, chlorinate rubber, polyester resins, acrylic or vinyltoluene-acrylic resins, alkyd resins, tributyltin-acrylate and methacrylate copolymers, or even latex based on vinylacetate or styrene-butylacrylate or pure acrylic emulsions.

The resin system generally comprises a solvent for the resin components. Typical examples of solvents used in the paint industry are aliphatic and aromatic solvents, alcohols, ketones, esters, glycol ethers, and the like. However, the paint system may also be solventless.

The paint compositions of the present invention may also comprise levelling agents, matting agents, pigments and other additives well known in the art.

The paint compositions of the present invention may be applied using a brush, a roller or a spray-gun, whether airless or not.

The following examples are intended to be illustrate and are not intended to limit the scope of the present invention.

## Example 1

### A. Preparation of the thixotropic agent

12 mol hexamethylene diamine (HMDA) and 12 mol hexanoic acid were stirred in 800 g xylene and heated under nitrogen at 155-175°C for 4 hours until the production of reaction water stopped.

In the resulting mixture, 12 eq-COOH of Pripol 1018 and another 400 g xylene were added ; after a further 4 hours reaction time at 165-185°C under nitrogen, no more water was distilled.

After removal of the xylene by vacuum distillation, a thixotropic agent was obtained which will hereinafter be called "E".

### B. Incorporation into a paint composition

The thixotropic agent was dissolved in boiling isobutanol to obtain a solution containing 25 wt % of agent. When cooled to room temperature, this solution solidified into a waxy product, but it liquified upon re-heating.

Before addition of the thixotropic agent, the paint composition, which was of the epoxy-ester type, was as follows, and will be called paint base "I" hereinafter :

```
- epoxyester resin having an epoxy equivalent of 750    30 wt%
- titanium dioxide TITANRKB-2 (Trade Mark of Bayer)    20 wt%
- Al-Mg silicate (< 40 μm particle size)               15 wt%
- Al silicate    (< 20 μm particle size)               15 wt%
- xylene                                               20 wt%
```

4 g of the solution, containing 1 g of the thixotropic agent, were added under stirring to 100 g of the composition described hereabove, both being at a temperature of about 60°C. After addition, the paint composition was thoroughly mixed by stirring for 2 minutes, then kept at 60°C for a further 30 minutes.

### C. Viscosity measurements

Three days after preparation of the paint composition, stored at about 20°C, its viscosity was measured at 20°C in a rotary type viscosimeter.

The value determined after 30s high rotation was 8.5 Pa.s, whereas after 5s low roation it was 67.2 Pa.s. The ratio of the low rotation viscosity to the high rotation viscosity, which shows the existence of some thixotropic properties and which is hereinafter called the thixotropy index, was therefore 7.9.

### D. Finessess measurements

The method used was classical Hegmann method.

The fineness measurements were carried out on the same day as the viscosity measurements, then again after 6 weeks storage at 60°C. Both determinations yielded values lower than 25 μm.

### E. Mixture with a hardener

Five days after preparation of the paint composition, the paint composition having been stored at 20°C, 100 g of the paint composition including the thixotroptic agent were mixed with 15 g of a xylene + isobutanol solution containing 50 wt % of a polyamidoamine having a N-H equivalent of 280 mgKOH/g, then left for 10 min at about 20°C.

F. Sag tests

After having prepared the mixture with the hardener as described hereabove, the sag test was carried out with a blade having 11 gaps increasing in 0.1 mm steps from 0.1 mm to 1.1 mm. With this blade, 11 wet strips of increasing thickness were applied to a metal plate which was then immediately plated in a vertical position.

When the plate was kept at about 20°C, the maximum dry-layer thickness for which no sagging occurred was 500 μm ; when the plate was kept at 45°C, said tickness was 375 μm, and when the plate was kept at 60°C, it was 200 μm.

The sag-tests were repeated after 3 weeks storage of the paint at 60°C. The maximum dry-layer thickness for which no sagging occured was 570 μm at 20°C. At 45°C no sagging was observed and the maximum dry-layer thickness was 400 μm. When the plate was kept at 60°C, the maximum dry-layer thickness for which no sagging occurred was 250 μm.

This example shoves that the improved paint compositions containing the thixotropic agents of the invention retain their good properties after having been stored at elevated temperature.

The above results, as well as the results of other examples and comparative examples are summarised in Table 2. All have been carried out as explained in Example 1, except where otherwise mentioned below.

TABLE 2

| a | b | c | d | e | f | g | h | i | j | k | l | m | n | o |
|---|---|---|---|---|---|---|---|---|---|---|---|---|---|---|
| 1 | I | E | 0.8 | 67.2 | 8.5 | 7.9 | <25 | | 500 | 375 | 200 | 570 | >400 | 250 |
| 2 | II | E | 1.0 | 44.8 | 10.3 | 4.3 | <25 | | 580 | 430 | 270 | 700 | 600 | 240 |
| 3 | III | E | 0.9 | 25.6 | 5.0 | 5.1 | <20 | | 430 | 350 | 325 | >300 | >300 | >300 |
| C1 | I | – | 0 | 1.3 | 0.85 | 1.5 | <25 | | 40 | | | 40 | | |
| C2 | II | – | 0 | 4.8 | 2.1 | 2.3 | <25 | | 95 | 80 | 75 | 65 | 50 | |
| C3 | III | – | 0 | 3.2 | 1.2 | 2.6 | <20 | | 50 | | | 55 | 55 | |
| C4 | I | T | 0.8 | 19.2 | 4.1 | 4.7 | <25 | | 125 | 95 | 65 | 140 | 70 | 60 |
| 4 | I | F | 0.8 | | | | <25 | | 440 | | 400 | 400 | | 390 |
| 5 | II | F | 1.0 | | | | <25 | | | | 335 | 450 | | 200 |
| 6 | III | F | 0.9 | | | | <20 | <35 | | | | 400 | | 400 |

Key for Table 2

a : Example number
b : Identification of pain base
c : Identification of thixotropic agent
d : Concentration of thixotropic agent (wt % on the weight of plaint base)
e : Viscosity at low rotation, expressed in Pa.s
f : Viscosity at high rotation, expressed in Pa.s
g : Thixotropy index
h, i : Fineness (expressed in μm) respectively before and after storage ; only one figure given if unchanged.
j to o : Maximum dry-layer thickness (expressed in μm) without sagging :

|  | at 20°C | at 45°C | at 60°C |
|---|---|---|---|
| after 5 days at 20°C | j | k | l |
| 3 weeks at 60°C later | m | n | o |

Exceptions are underlined : in examples 4 to 6, storage was effected 2 weeks at 70°C instead of 3 weeks at 60°C.

#### Example 2

A. Paint base "II"

The following pairt base was used, hereinafter called "II" :

| | |
|---|---|
| - Epikote 828 (Trade Mark for an epoxy resin having 0.51-0.55 epoxy equivalents per 100 g) | 30 wt % |
| - Epikote 1001 (Trade Mark for an epoxy resin having 0.20-0.22 epoxy equivalents per 100 g) | 7.5 wt % |
| - Titanium dioxide (TITANRKB-2 from BAYER) | 10 wt % |
| - Al-Mg silicate ( < 40 μm particle size) | 10 wt % |
| - quartz powder ( < 20 μm particle size) | 30 wt % |
| - xylene | 12.5 wt % |

B. Tests

The tests were carried out as described in Example 1. However the hardener used was a polyamidoamine, having a NH equivalent of 130 mg KOH/g, of which 23 g were added to 100 g of paint base.

#### Example 3

A. Paint base "III"

The following paint base was used, hereinafter called "III" :

| | |
|---|---|
| - Epikote 1007 (Trade Mark; an epoxy resin having 0.36 OH equivalents per 100 g) | 15 wt % |
| - Titanium dioxide by BAYER RKB-2 | 10 wt % |
| - Synthetic BaSO₄ ( <30 μm particle size) | 20 wt % |
| - Al-Mg silicate ( <40 μm particle size) | 15 wt % |
| - methyl-isobutyl-ketone | 15 wt % |
| - xylene | 25 wt % |

B. Incorporation of the thixotropic agents

The thixotropic agent was dissolved in boiling cyclohexane to form a solution containing 25 wt % of agent.
This solution was kept at 60°C and was added under stirring to paint base "III", also kept at 60°C. After addition, the paint composition was thoroughly mixed by stirring for 2 minutes, then kept at 60°C for a further 30 minutes.

7

## C. Tests

The tests were carried out as described in Example 1. However the hardener used was an isocyanate-type hardener commercially available under the Trade Name DESMODUR-VL (Bayer) and having an isocyanate equivalency of 140. The hardener and the paint composition were mixed in a weight ratio of 8.5 :100.

### Comparative examples 1 to 3

The same paint compositions were prepared as in Examples 1 to 3 respectively, however without addition of any thixotropic agent.

### Comparative example 4

0.8 g of THIXATROL ST (an organic derivative of castor oil ; Thixatrol is a trade name of NL Industries), herein called thixotropic agent "T", were incorporated into 100 g of paint base "I" according to the recommended procedure.

Using the mixture of the paint composition with the hardener prepared as described above, a dry-layer thickness of 130 μm was obtained after an air spraying test on a vertical surface at 60°C.

### Examples 4 to 6

Thixotropic agent "F" was prepared as in Example 1. However Pripol 1018 was replaced by Pripol 1040.
The sag-tests after storage at elevated temperatures were carried out after 2 weeks storage at 70°C instead of 3 weeks at 60°C.

### Examples 7 to 21

#### A. Preparation of thixotropic agent "G"

The same preparation method was used as in Example 1. However Pripol 1018 was replaced by Pripol 1014.

#### B. Incorporation into the paint composition

Thixotropic agents E, F and G were dissolved in boiling isobutanol (paint bases I and II) or N-methylpyrrolidone (paint base III) to form solutions containing 25 wt % of agent.
These solution were added under stirring to respectively paint bases I, II and III, all being at a temperature of 60°C. After addition, the paint compositions were thoroughly mixed by stirring for 2 minutes, then kept at 60°C for 90 minutes, followed by storage at room temperature for 3 days. The nature of the paint base and of the thixotropic agent and the concentration of the latter are summarised in Table 3.

#### C. Fineness measurements

All fineness determinations using the Hegman method yielded values lower than 25 μm, except for esamples prepared with paint base III and thixotropic agent "E".
The same results were obtained after 2 weeks storage at 60°C.

#### D. Sag tests

The sag tests were carried out after 2 weeks storage at 60°C.
The hardeners used in relation with paint bases I, II and III are those described respectively in Examples 1, 2 and 3 ;
The maximum dry and wet thickness obtained without sagging are summarised in Table 3, where they are expressed in μm.

T A B L E  3

| Example n° | Paint base | Thixotropic agents | | μm at 20°C | | μm at 60°C | |
|---|---|---|---|---|---|---|---|
| | | name | wt% on paint base | wet | dry | wet | dry |
| 7. | I | E | 0.8 | 1100 | 400 | 400 | 145 |
| 8 | I | F | 0.8 | 1100 | 400 | 1000 | 400 |
| 9 | I | G | 0.8 | 1100 | 400 | 600 | 220 |
| 10 | II | E | 0.9 | 1100 | 500 | 300 | 180 |
| 11 | II | F | 0.9 | 1100 | 500 | 400 | 210 |
| 12 | II | G | 0.9 | 1100 | 500 | 600 | 280 |
| 13 | II | E | 1.0 | 1100 | 500 | 400 | 200 |
| 14 | II | F | 1.0 | 1100 | 500 | 500 | 230 |
| 15 | II | G | 1.0 | 1100 | 500 | 500 | 250 |
| 16 | III | E | 0.8 | 1100 | 450 | 800 | 280 |
| 17 | III | F | 0.8 | 1100 | 450 | 1100 | 450 |
| 18 | III | G | 0.8 | 1100 | 450 | 1100 | 430 |
| 19 | III | E | 0.9 | 1100 | 450 | 1100 | 420 |
| 20 | III | F | 0.9 | 1100 | 450 | 1100 | 450 |
| 21 | III | G | 0.9 | 1100 | 450 | 1100 | 450 |

### Example 22

A sample obtained from paint base II and thixotropic agent G, and containing 0.95 wt % of G based on II, was stored for 2 weeks at 60°C before applying bt air-spraying to a vertical surfae having a temperature of 60°C. No sagging observed for a wet-layer thickness of 600 μm corresponding to a dry-layer thickness of 325 μm.

For comparative purposes, this test was repeated with a fresh sample of paint II containing 0.8 wt % of Thixatrol ST (based on II). The maximum dry-layer thickness obtained without sagging was 140 μm.

### Example 23

#### A. Preparation of the thixotropic agent

0.2 mol HMDA and 0.2 eq.-COOH of Pripol 1018 were heated in 50 g boiling xylene for 2 hours under reflux and under a nitrogen stream, eliminating the reaction water by azeotropic distillation.

Subsequently, 0.21 mol acetic acid were added slowly, and the mixture was heated under nitrogen for one further hour before distillation of the xylene.

#### B. Incorporation into a paint composition

The thixotropic agent was dissolved at 50°C in isobutanol to form a solution containing 25 wt % of agent.

While still warm, 4 g of this solution were added to 100 g of paint base "II" and thoroughly stirred. Mixing was continued for 2 minutes, and the paint composition was stored at 60°C for 3 weeks.

C. Sag-tests

When the plate was kept at 20 and 60°C, the maximum dry-layer thickness was 590 and 145 µm respectively.

Example 24

180 g xylene were introduced in a reactor. Subsequently, 335.7 g hexamethylene diamine then 376.2 g heptanoic acid were added while stirring. The mixture, already brought to a temperature higher than 100°C by the reaction heat, was further heated at 155-175°C and refluxed for about 3 hours until no more water was recovered by azeotropic distillation. At the end of the reaction, the acid number was 6.1, and the amount of water recovered was about 60 ml.

To the resulting mixture, 839,3 g of Pripol 1017 and a further 90 g xylene were added. After a further 3 hours reaction time at 165-195°C, no more water was recovered. The acid number was 8.4, and the amount of water recovered was about 50 ml.

After removal of the xylene by vacuum distillation at 175-180°C, a thixotropic agent was obtained which will hereinafter be called "H".

While still at a temperature of about 120°C, the thixotropic agent was introduced into 1447.2 g of isobutanol at a temperature of about 50°C, resulting in a 49 wt % solution at a temperature of about 80°C.

When cooled to room temperature, this solution solidifies into a waxy product, but it liquifies upon re-heating above about 70°C.

0.7 g of this solution were added to 87 g of the following composition at a temperature of about 70°C :

17 p.b.w.    Epikote 828 (as hereinbefore described)

11 p.b.w.    Pripol 1022 (commercially available polymer fatty acids, comprising :
80 % dimer acids
20 % trimer acids and having an acid value of 192 mg kOH/g)

```
0.03 p.b.w. siccative
0.02 p.b.w. levelling agent (silicone oil)
23   p.b.w. TITANRKB-2 pigment (as hereinbefore described)
13   p.b.w. talcum powder (20 µm particle size)
12   p.b.w. feldspath pigment
20   p.b.w. solvents
```

This mixture was, immediately before use, mixed with 13 g of a hardener having the following composition:

26 p.b.w.    Epilink 177 (Trade Mark for a diamine hardener having an epoxy equivalent weight of 50)

22 p.b.w.    Epikote 1001 (as herein before described)

5 p.b.w.    hardening accelerator (t-aminophenol)

56 p.b.w.    solvents

The dry-layer thicknesses obtained after air spraying the resulting mixture on vertical surfaces at temperatures of 20 and 60°C were not substantially different.

## Claims

**Claims for the following Contracting States : BE-CH-DE-FR-GB-IT-LI-LU-NL-SE**

1. Use as additive for imparting thixotropic properties to paint compositions of the polyamide which is obtainable by the reaction of
(i) one or more diamines selected from xylylene diamine and alpha-omega diaminoalkanes containing 4 to 8 carbon atoms ; and

(ii) one or more carboxylic acids of general formula $H - C_nH_{2n} - COOH$, wherein n = 1 to 11, the molar ratio of the carboxylic acids to the diamines ranging from 1 : 1 to 2 : 3 ; and

(iii) dimer acids, in such amount that the number of amine groups is about equal to the total number of carboxyl groups in compounds (ii) and (iii).

2. Use according to claim 1, wherein the diamine is selected from alpha-omega diaminoalkanes containing 4 to 8 carbon atoms.

3. Use according to claim 1 or claim 2, wherein in the carboxylic acids of general formula $H - C_nH_{2n} - COOH$, n is from 1 to 6.

4. Use according to claim 1, claim 2 or claim 3, wherein the carboxylic acid comprises acetic acid or hexanoic acid.

5. Use according to any foregoing claim, wherein the molar ratio of carboxylic acids to the diamines is about 1 : 1.

6. Use according to any foregoing claim, wherein the dimer acids comprise predominantly dicarboxylic acids.

7. Use according to any foregoing claim of the polyamide which is obtainable by the reaction of

(i) hexamethylene diamine, and

(ii) one or more carboxylic acids of general formula $H - C_nH_{2n} - COOH$, wherein n = 1 to 5, the molar ratio of the carboxylic acids to the diamine being about 1 : 1, and

(iii) dimer acids containing predominantly dicarboxylic acids and having an acid number of about 190 mg KOH/g, in such amount that the number of amine groups is about equal to the total number of carboxyl groups in compounds (ii) and (iii).

8. Use according to any foregoing claim, wherein the carboxylic acid comprises hexanoic acid or heptanoic acid.

9. Use according to any foregoing claim, wherein up to 5 % by weight, based on the weight of the composition, of a polyamide as set forth in any one of claims 1 to 8 ; is incorporated in said compositions.

10. Use according to claim 9, wherein from 0.1 to 3 % by weight, based on the weight of the composition, of a polyamide as set forth in any one of claims 1 to 8, is incorporated in said compositions.

11. Process for incorporating into paint compositions a polyamide as set forth in any one of claims 1 to 8, the process comprising the steps of :

(i) dissolving said polyamide into a solvent, either or both of them being heated as much as required ; and

(ii) adding the solution which is obtained in dissolving step (i) to the mixture of the other components of the paint composition.

12. Process according to claim 11, wherein before the solution is added to the mixture in step (ii), the mixture is heated to a desired temperature.

13. Process according to claim 11 or claim 12, further comprising the step, after dissolving step (i), of cooling down, storing and re-heating the solution obtained in dissolving step (i).

14. Process according to claim 11, claim 12 or claim 13, wherein the solvent is isobutanol, cyclohexanone, N-methylpyrrolidone, dimethylformamide, propylene glycol ether, or a mixture of any of those compounds.

15. Process according to any one of claims 11 to 14, wherein the amount of polyamide dissolved in the solvent is at least 10 % by weight.

16. Process according to claim 15, wherein the amount of polyamide dissolved in the solvent is at least 25 wt %.

17. Process according to claim 16, wherein the amount of polyamide dissolved in the solvent is about 50 wt %.


**Claims for the following Contracting State : AT**

1. Process for imparting thixotropic properties to paint compositions by incorporating therein a polyamide which is obtainable by the reaction of

(i) one or more diamines selected from xylylene diamine and alpha-omega diaminoalkanes containing 4 to 8 carbon atoms ; and

(ii) one or more carboxylic acids of general formula $H - C_n H_{2n} - COOH$, wherein n = 1 to 11, the molar ratio of the carboxylic acids to the diamines ranging from 1 : 1 to 2 : 3 ; and

(iii) dimer acids, in such amount that the number of amine groups is about equal to the total number of carboxyl groups in compounds (ii) and (iii).

2. Process according to claim 1, wherein the diamine is selected from alpha-omega diaminoalkanes containing 4 to 8 carbon atoms.

3. Process according to claim 1 or claim 2, wherein in the carboxylic acids of general formula $H - C_nH_{2n} -$

COOH, n is from 1 to 6.

4. Process according to claim 1, claim 2 or claim 3, wherein the carboxylic acid comprises acetic acid or hexanoic acid.

5. Process according to any foregoing claim, wherein the molar ratio of carboxylic acids to the diamines is about 1 :1.

6. Process according to any foregoing claim, wherein the dimer acids comprises predominantly dicarboxylic acids.

7. Process according to any foregoing claim wherein the polyamide is a polyamide which is obtainable by the reaction of

(i) hexamethylene diamine, and

(ii) one or more carboxylic acids of general formula $H - C_nH_{2n} - COOH$, wherein n = 1 to 5, the molar ratio of the carboxylic acids to the diamine being about 1 :1, and

(iii) dimer acids containing predominantly dicarboxylic acids and having an acid number of about 190 mg KOH/g, in such amount that the number of amine groups is about equal to the total number of carboxyl groups in compounds (ii) and (iii).

8. Process according to any foregoing claim, wherein the carboxylic acid comprises hexanoic acid or heptanoic acid.

9. Process according to any foregoing claim, wherein up to 5 % by weight, based on the weight of the composition, of a polyamide as set forth in any one of claims 1 to 8, is incorporated in said compositions.

10. Process according to claim 9, wherein from 0.1 to 3 % by weight, based on the weight of the composition, of a polyamide as set forth in any one of claims 1 to 8, is incorporated in said compositions.

11. Process for incorporating into paint compositions a polyamide as set forth in any one of claims 1 to 8, the process comprising the steps of :

(i) dissolving said polyamide into a solvent, either or both of them being heated as much as required ; and

(ii) adding the solution which is obtained in dissolving step (i) to the mixture of the other components of the paint composition.

12. Process according to claim 11, wherein before the solution is added to the mixture in step (ii), the mixture is heated to a desired temperature.

13. Process according to claim 11 or claim 12, further comprising the step, after dissolving step (i), of cooling down, storing and re-heating the solution obtained in dissolving step (i).

14. Process according to claim 11, claim 12 or claim 13, wherein the solvent is isobutanol, cyclohexanone, N-methylpyrrolidone, dimethylformamide, propylene glycol ether, or a mixture of any of those compounds.

15. Process according to any one of claims 11 to 14, wherein the amount of polyamide dissolved in the solvent is at least 10 % by weight.

16. Process according to claim 15, wherein the amount of polyamide dissolved in the solvent is at least 25 wt %.

17. Process according to claim 16, wherein the amount of polyamide dissolved in the solvent is about 50 wt %.


## Patentansprüche

### Ansprüche Für folgenden Vertragsstaaten : BE, CH, DE, FR, GB, IT, LI, LU, NL, SE

1. Verwendung des Polyamids als Additiv, um Farbzusammensetzungen thixotrope Eigenschaften zu verleihen, das erhältlich ist durch die Reaktion von :

(i) einem oder mehreren Diaminen, ausgewählt aus Xylylendiamin und alpha-omega-Diaminoalkanen, enthaltend 4 bis 8 Kohlenstoffatome ; und

(ii) einer oder mehreren Carbonsäuren der allegmeinen Formel $H-C_nH_{2n}-COOH$, wobei n = 1 bis 11 ist, wobei das Molverhältnis der Carbonsäuren zu den Diaminen von 1 :1 bis 2 :3 reicht ; und

(iii) Dimersäuren in solch einer Menge, daß die Anzahl der Aminogruppen etwa der Gesamtzahl der Carboxylgruppen in den Verbindungen (ii) und (iii) gleich ist.

2. Verwendung nach Anspruch 1, wobei das Diamin aus alpha-omega-Diaminoalkanen ausgewählt ist, die 4 bis 8 Kohlenstoffatome enthalten.

3. Verwendung nach Anspruch 1 oder Anspruch 2, wobei in den Carbonsäuren der allgemeinen Formel $H-C_nH_{2n}-COOH$ n 1 bis 6 ist.

4. Verwendung nach Anspruch 1, Anspruch 2 oder Anspruch 3, wobei die Carbonsäure Essigäure oder Hexansäure umfaßt.

5. Verwendung nach einem der vorhergehenden Ansprüche, wobei das Molverhältnis der Carbonsäuren zu den Diaminen etwa 1 :1 ist.

6. Verwendung nach einem der vorhergehenden Ansprüche, wobei die Dimersäuren überwiegend Dicarbonsäuren umfassen.

7. Verwendung des Polyamids nach einem der vorhergehenden Ansprüche, das erhältlich ist durch die Reaktion von :

(i) Hexamethylendiamin, und

(ii) einer oder mehreren Carbonsäuren der allgemeinen Formel $H-C_nH_{2n}-COOH$, wobei $n = 1$ bis 5 ist, wobei das Molverhältnis der Carbonsäuren zum Diamin etwa 1 :1 ist ; und

(iii) Dimersäure, enthaltend vorwiegend Dicarbonsäuren und mit einer Säurezahl von etwa 190 mg KOH/g, in solch einer Menge, daß die Anzahl der Aminogruppen der Gesamtzahl der Carboxylgruppen in den Verbindungen (ii) und (iii) etwa gleich ist.

8. Verwendung nach einem der vorhergehenden Ansprüche, wobei die Carbonsäure Hexansäure oder Heptansäure umfaßt.

9. Verwendung nach einem der vorhergehenden Ansprüche, wobei bis zu 5 Gew.-%, bezogen auf das Gewicht der Zusammensetzung, eines Polyamids nach einem der Ansprüche 1 bis 8 in die Zusammensetzungen eingebracht sind.

10. Verwendung nach Anspruch 9, wobei 0,1 bis 3 Gew.-%, bezogen auf das Gewicht der Zusammensetzung eines Polyamids nach einem der Ansprüche 1 bis 8 in die Zusammensetzungen eingebracht sind.

11. Verfahren zum Einbringen eines Polyamids nach einem der Ansprüche 1 bis 8 in Farbzusammensetzungen, wobei das Verfahren die Schritte aufweist :

(i) Auflösen des polyamids in einem Lösungsmittel, wobei eines davon oder beide so weit erhitzt werden, wie es erfordelich ist, und

(ii) Hinzufügen der im Auflöse-Schritt (i) erhaltenen Lösung zum Gemisch der anderen Komponenten der Farbzusammensetzung.

12. Verfahren nach Anspruch 11, wobei das Gemisch auf eine gewünschte Temperatur erhitzt wird, bevor die Lösung zum Gemisch in Schritt (ii) zugefügt wird.

13. Verfahren nach Anspruch 11 oder Anspruch 12, das nach dem Auflöse-Schritt (i) einen weiteren Schritt umfaßt, und zwar Abkühlen, Lagern und Wiedererhitzen der im Auflöse-Schritt (i) erhaltenen Lösung.

14. Verfahren nach Anspruch 11, Anspruch 12 oder Anspruch 13, wobei das Lösungsmittel Isobutanol, Cyclohexanon, N-Methylpyrrolidon, Dimethylformamid, Propylenglycolether oder ein Gemisch jeder dieser Verbindungen ist.

15. Verfahren nach einem der Ansprüche 11 bis 14, wobei die Menge an Polyamid, die im Lösungsmittel gelöst sind, mindestens 10 Gew.-% ist.

16. Verfahren nach Ansprüche 15, wobei die Menge an Polyamid, die im Lösungsmittel gelöst sind, mindestens 25 Gew.-% ist.

17. Verfahren nach Ansprüche 16, wobei die Menge an Polyamid, die im Lösungsmittel gelöst sind, mindestens 50 Gew.-% ist.

**Ansprüche Für folgenden Vertragsstaat : AT**

1. Verfahren, um Farbzusammensetzungen durch das Einbringen eines Polyamids thixotrope Eingenschaften zu verleichen, das erhältlich ist durch die Reaktion von :

(i) einem oder mehreren Diaminen, ausgewählt aus Xylylendiamin und alpha-omega-Diaminoalkanen, enthaltend 4 bis 8 Kohlenstoffatome ; und

(ii) einer oder mehreren Carbonsäuren der allegemeinen Formel $H-C_nH_{2n}-COOH$, wobei $n = 1$ bis 11 ist, wobei das Molverhältnis der Carbonsäuren zu den Diaminen von 1 :1 bis 2 :3 reicht ; und

(iii) Dimersäuren in solch einer Menge, daß die Anzahl der Aminogruppen etwa der Gesamtzahl der Carboxylgruppen in den Verbindungen (ii) und (iii) gleich ist.

2. Verfahren nach Anspruch 1, wobei das Diamin aus alpha-omega-Diaminoalkanene ausgewählt ist, die 4 bis 8 Kohlenstoffatome enthalten.

3. Verfahren nach Anspruch 1 oder Anspruch 2, wobei in den Carbonsäure der allgemeinen Formel $H-C_nH_{2n}-COOH$ $n$ 1 bis 6 ist.

4. Verfahren nach Anspruch 1, Anspruch 2 oder Anspruch 3, wobei die Carbonsäure Essigsäure oder Hexansäure umfaßt.

5. Verfahren nach einem der vorhergehenden Ansprüche, wobei das Molverhältnis der Carbonsäure zu den Diaminen etwa 1 :1 ist.

6. Verfahren nach einem der vorhergehenden Ansprüche, wobei die Dimensäuren überwiegend Dicarbonsäuren umfassen.

7. Verfahren nach einem der vorhergehenden Ansprüche, wobei das Polyamid ein Polyamid ist, das erhältlich ist durch die Reaktion von :

(i) Hexamethylendiamin, und

(ii) einer oder mehreren Carbonsäuren der allgemeinen Formel $H-C_nH_{2n}-COOH$ wobei n = 1 bis 5 ist, wobei das Molverhältnis der Carbonsäuren zum Diamin etwa 1 :1 ist ; und

(iii) Dimersäuren, enthaltend vorwiegend Dicarbonsäuren und mit einer Säurezahl von etwa 190 mg KOH/g, in solch einer Menge, daß die Anzahl der Aminogruppen der Gesamtzahl der Carboxylgruppen in den Verbindungen (ii) und (iii) etwa gleich ist.

8. Verfahren nach einem der vorhergehenden Ansprüche, wobei die Carbonsäure Hexansäure oder Heptansäure umfaßt.

9. Verfahren nach einem der vorhergehenden Ansprüche, wobei bis zu 5 Gew.-%, bezogen auf das Gewicht der Zusammensetzung, eines Polyamids nach eine n der Ansprüche 1 bis 8 in die Zusammensetzungen eingebracht sind.

10. Verfahren nach Anspruch 9, wobei 0,1 bis 3 Gew.-%, bezogen auf das Gewicht der Zusammensetzung eines Polyamids nach einem der Ansprüche 1 bis 8 in die Zusammensetzungen eingebracht sind.

11. Verfahren zum Einbringen eines Polyamids nach einem der Ansprüche 1 bis 8 in Farbzusammensetzungen, wobei das Verfahren die Schritte aufweist :

(i) Auflösen des Polyamids in einem Lösungsmittel, wobei eines davon oder beide so weit erhitzt werden, wie es erforderlich ist, und

(ii) Hinzufügen der im Auflöse-Schritt (i) erhaltenen Lösung zum Gemisch der anderen Komponenten der Farbzusammensetzung.

12. Verfahren nach Anspruch 11, wobei das Gemisch auf eine gewünschte Temperatur erhitzt wird, bevor die Lösung zum Gemisch in Schritt (ii) zugefügt wird.

13. Verfahren nach Anspruch 11 oder Anspruch 12, das nach dem Auflöse-Schritt (i) einen weiteren Schritt umfaßt, und zwar Abkühlen, Lagern und Wiedererhitzen der im Auflöse-Schritt (i) erhaltenen Lösung.

14. Verfahren nach Anspruch 11, Anspruch 12 oder Anspruch 13, wobei das Lösungmittel Isobutanol, Cyclohexanon, N-Methhylpyrrolidon, Dimethylformamid, Propylenglycolether oder ein Gemisch jeder dieser Verbindungen ist.

15. Verfahren nach einem der Ansprüche 11 bis 14, wobei die Menge an Polyamid, die im Lösungsmittel gelöst sind, mindestens 10 Gew.-% ist.

16. Verfahren nach Ansprüche 15, wobei die Menge an Polyamid, die im Lösungsmittel gelöst sind, mindestens 25 Gew.-% ist.

17. Verfahren nach Ansprüche 16, wobei die Menge an Polyamid, die im Lösungsmittel gelöst sind, mindestens 50 Gew.-% ist.

## Revendications

### Revendications pour les Etats contractants suivants : BE CH DE FR GB IT LI LU NL SE

1. Utilisation comme additif destiné à conférer des propriétés thixotropes à des compositions de peinture, du polyamide que l'on obtient en faisant réagir :

(i) une ou plusieurs diamines choisies parmi la xylylènediamine et des alpha-omega-diaminoalcanes contenant de 4 à 8 atomes de carbone ; et

(ii) un ou plusieurs acides carboxyliques répondant à la formule générale $H-C_nH_{2n}-COOH$, dans laquelle n = 1 à 11, le rapport molaire des acides carboxyliques aux diamines étant situé dans l'intervalle allant de 1 :1 à 2 :3 ; et

(iii)des acides dimères en une quantité telle que le nombre des groupes d'amine soit à peu près égal au nombre total des groupes carboxyle dans les composés (ii) et (iii).

2. Utilisation selon la revendication 1, dans laquelle la diamine est choisie parmi les alpha-omega-diaminoalcanes contenant de 4 à 8 atomes de carbone.

3. Utilisation selon la revendication 1 ou 2, dans laquelle, dans les acides carboxyliques répondant à la formule générale $H-C_nH_{2n}-COOH$, n représente un chiffre de 1 à 6.

4. Utilisation selon la revendication 1, 2 ou 3, dans laquelle l'acide carboxylique est constitué d'acide acétique ou d'acide hexanoïque.

5. Utilisation selon l'une quelconque des revendications précédentes, dans laquelle le rapport molaire des acides carboxyliques aux diamines est d'environ 1 :1.

6. Utilisation selon l'une quelconque des revendications précédentes, dans laquelle les acides dimères sont constitués principalement d'acides dicarboxyliques.

7. Utilisation selon l'une quelconque des revendications précédentes du polyamide que l'on peut obtenir en faisant réagir :

(i) l'hexaméthylènediamine, et

(ii) un ou plusieurs acides carboxyliques répondant à la formule générale $H-C_nH_{2n}-COOH$, dans laquelle n = 1 à 5, le rapport molaire des acides carboxyliques à la diamine étant de 1 :1 ; et

(iii) des acides dimères contenant principalement des acides dicarboxyliques et ayant un indice d'acide d'environ 190 mg KOH/g, en une quantité telle que le nombre de groupes d'amine soit à peu près égal au nombre total des groupes carboxyles au sein des composés (ii) et (iii).

8. Utilisation selon l'une quelconque des revendications précédentes, dans laquelle l'acide carboxylique est constitué d'acide hexanoïque ou d'acide heptanoïque.

9. Utilisation selon l'une quelconque des revendications précédentes, dans laquelle on incorpore dans ces compositions jusqu'à 5% en poids, basé sur le poids de la composition, d'un polyamide tel que présenté dans l'une quelconque des revendications 1 à 8.

10. Utilisation selon la revendication 9, dans laquelle on incorpore dans ces compositions de 0,1 à 3% en poids, basé sur le poids de la composition, d'un polyamide tel que présenté dans l'une quelconque des revendications 1 à 8.

11. Procédé destiné à incorporer au sein de compositions de peinture, un polyamide tel que présenté dans l'une quelconque des revendications 1 à 8, ce procédé comprenant les étapes consistant à :

(i) dissoudre le polyamide dans un solvant, l'un ou l'autre ou les deux étant chauffés autant qu'il le faut ; et

(ii) ajouter la solution que l'on obtient dans l'étape (i) de dissolution au mélange des autres constituants de la composition de peinture.

12. Procédé selon la revendication 11, dans lequel, avant d'ajouter la solution au mélange de l'étape (ii), on chauffe le mélange à la température désirée.

13. Procédé selon la revendication 11 ou 12, comprenant, en outre, suite à l'étape (i) de dissolution, l'étape consistant à refroidir, à entreposer et à réchauffer, à nouveau, la solution obtenue au cours de l'étape (i) de dissolution.

14. Procédé selon la revendication 11, 12 ou 13 dans lequel le solvant est : l'isobutanol, la cyclohexanone, la N-méthylpyrrolidone, le diméthylformamide, l'éther de propylèneglycol ou un mélange de n'importe lequel de ces composés.

15. Procédé selon l'une quelconque des revendication 11 à 14, dans lequel la quantité de polyamide dissous dans le solvant est d'au moins 10% en poids.

16. Procédé selon la revendication 15, dans lequel la quantité de polyamide dissous dans le solvant est d'au moins 25% en poids.

17. Procédé selon la revendication 16, dans lequel la quantité de polyamide dissous dans le solvant est d'au moins 50% en poids.

**Revendications pour l'Etat contractant suivant : AT**

1. Procédé destiné à conférer des propriétés thixotropes à des compositions de peinture en y incorporant un polyamide que l'on obtient en faisant réagir :

(i) une ou plusieurs diamines choisies parmi la xylylènediamine et les alpha-omega-diaminoalcanes contenant de 4 à 8 atomes de carbone ; et

(ii) un ou plusieurs acides carboxyliques répondant à la formule générale $H-C_nH_{2n}-COOH$, dans laquelle n = 1 à 11, le rapport molaire des acides carboxyliques aux diamines étant situé dans l'intervalle allant de 1 :1 à 2 :3 ; et

(iii) des acides dimères en une quantité telle que le nombre des groupes d'amine soit à peu près égal au nombre total des groupes carboxyle dans les composés (ii) et (iii).

2. Procédé selon la revendication 1, dans lequel la diamine est choisie parmi les alpha-omega-diaminoalcanes contenant de 4 à 8 atomes de carbone.

3. Procédé selon la revendication 1 ou 2, dans lequel, dans les acides carboxyliques répondant à la formule générale $H-C_nH_{2n}-COOH$, n représente un chiffre de 1 à 6.

4. Procédé selon la revendication 1, 2 ou 3, dans lequel l'acide carboxylique est constitué d'acide acétique ou d'acide hexanoïque.

5. Procédé selon l'une quelconque des revendications précédentes, dans lequel le rapport molaire des acides carboxyliques aux diamines est d'environ 1 :1.

6. Procédé selon l'une quelconque des revendications précédentes, dans lequel les acides dimères sont constitués principalement d'acides dicarboxyliques.

7. Procédé selon l'une quelconque des revendications précédentes, dans lequel le polyamide est un polyamide que l'on peut obtenir en faisant réagir :

(i) l'hexaméthylènediamine, et

(ii) un ou plusieurs acides carboxyliques répondant à la formule générale $H-C_nH_{2n}-COOH$, dans laquelle n = 1 à 5, le rapport molaire des acides carboxyliques à la diamine étant de 1 :1 ; et

(iii) des acides dimères contenant principalement des acides dicarboxyliques et ayant un indice d'acide d'environ 190 mg KOH/g, en une quantité telle que le nombre de groupes d'amine soit à peu près égal au nombre total des groupes carboxyles au sein des composés (ii) et (iii).

8. Procédé selon l'une quelconque des revendications précédentes, dans lequel l'acide carboxylique est constitué d'acide hexanoïque ou d'acide heptanoïque.

9. Procédé selon l'une quelconque des revendications précédentes, dans lequel on incorpore dans ces compositions jusqu'à 5% en poids, basé sur le poids de la composition, d'un polyamide tel que présenté dans l'une quelconque des revendications 1 à 8.

10. Procédé selon la revendication 9, dans lequel on incorpore dans ces compositions de 0,1 à 3% en poids, basé sur le poids de la composition, d'un polyamide tel que présenté dans l'une quelconque des revendications 1 à 8.

11. Procédé destiné à incorporer au sein de compositions de peinture, un polyamide tel que présenté dans l'une quelconque des revendications 1 à 8, ce procédé comprenant les étapes consistant à :

(i) dissoudre le polyamide dans un solvant, l'un au l'autre ou les deux étant chauffés autant qu'il le faut ; et

(ii) ajouter la solution que l'on obtient dans l'étape (i) de dissolution au mélange des autres constituants de la composition de peinture.

12. Procédé selon la revendication 11, dans lequel, avant d'ajouter la solution au mélange de l'étape (ii), on chauffe le mélange à la température désirée.

13. Procédé selon la revendication 11 ou 12, comprenant, en outre, suite à l'étape (i) de dissolution, l'étape consistant à refroidir, à entreposer et à réchauffer, à nouveau, la solution obtenue au cours de l'étape (i) de dissolution.

14. Procédé selon la revendication 11, 12 ou 13, dans lequel le solvant est : l'isobutanol, la cyclohexanone, la N-méthylpyrrolidone, le diméthylformamide, l'éther de propylèneglycol ou un mélange de n'importe lequel de ces composés.

15. Procédé selon l'une quelconque des revendications 11 à 14, dans lequel la quantité de polyamide dissous dans le solvant est d'au moins 10% en poids.

16. Procédé selon la revendication 15, dans lequel la quantité de polyamide dissous dans le solvant est d'au moins 25% en poids.

17. Procédé selon la revendication 16, dans lequel la quantité de polyamide dissous dans le solvant est d'au moins 50% en poids.